(19) **Europäisches Patentamt / European Patent Office / Office européen des brevets**

(11) **EP 3 419 193 A1**

(12) **EUROPEAN PATENT APPLICATION**
published in accordance with Art. 153(4) EPC

(43) Date of publication:
**26.12.2018 Bulletin 2018/52**

(51) Int Cl.:
**H04B 7/26** (2006.01)

(21) Application number: **16890150.2**

(22) Date of filing: **15.02.2016**

(86) International application number:
**PCT/CN2016/073796**

(87) International publication number:
**WO 2017/139915 (24.08.2017 Gazette 2017/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fujitsu Limited**
**Kawasaki-shi, Kanagawa 211-8588 (JP)**

(72) Inventors:
• ZHANG, Jian
  **Beijing 100025 (CN)**
• YANG, Xianjun
  **Beijing 100025 (CN)**
• WANG, Xin
  **Beijing 100025 (CN)**

(74) Representative: **Haseltine Lake LLP**
**Lincoln House, 5th Floor**
**300 High Holborn**
**London WC1V 7JH (GB)**

(54) **INFORMATION TRANSMISSION METHOD, DEVICE AND COMMUNICATION SYSTEM SUITABLE FOR NON-ORTHOGONAL MULTIPLE ACCESS**

(57)    An information transmission method, apparatus and communication system suitable for nonorthogonal multiple access. The method includes: modulating data to be transmitted into multiple constellation symbols; rotating the multiple constellation symbols by a first predetermined angle respectively to obtain multiple first symbols; performing real part and imaginary part interleaving on the multiple first symbols to obtain multiple second symbols; rotating the multiple second symbols by a second predetermined angle respectively to obtain multiple third symbols; performing real part and imaginary part interleaving on the multiple third symbols to obtain multiple fourth symbols; and mapping the multiple fourth symbols onto multiple resource elements and transmitting information. Hence, higher diversity gains can be obtained, system performance can further be improved, and more UEs can be multiplexed.

Fig. 3

**Description**

Technical Field

This disclosure relates to the field of communication technologies, and in particular to an information transmission method, apparatus and a communication system suitable for nonorthogonal multiple access.

Background

Machine type communication (MTC) is an outstanding feature of a 5th generation (5G) mobile communication system. In addition to a user equipment (UE, such as a smart cell phone) used by people in a conventional sense, more and more smart devices will become UEs and will be accessed into a system flexibly. In order to achieve an internet of everything, a 5G system needs to support more UEs than a 4G system. Hence, a new multiple access technique is more important in a 5G system.

Sparse code multiple access (SCMA) is a new multiple access technique. "Sparsity" refers to signals transmitted by a UE do not occupy all allocated resource, but more UEs are permitted to be accessed into the system by permitting multiple UEs to use the same resource. And the SCMA is substantially a nonorthogonal multiple access mode.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

Embodiments of this disclosure provide an information transmission apparatus, method and a communication system suitable for nonorthogonal multiple access, in which higher diversity gains can be obtained by performing secondary rotation on symbols, system performance can further be improved, and more UEs can be multiplexed.

According to a first aspect of the embodiments of this disclosure, there is provided an information transmission method suitable for nonorthogonal multiple access, including:

modulating data to be transmitted into multiple constellation symbols by a transmitting device;
rotating the multiple constellation symbols by a first predetermined angle respectively to obtain multiple first symbols;
performing real part and imaginary part interleaving on the multiple first symbols to obtain multiple second symbols; wherein, real parts and imaginary parts belonging to the same first symbol are dispersed to positions of real parts and imaginary parts of different second symbols;
rotating the multiple second symbols by a second predetermined angle respectively to obtain multiple third symbols;
performing real part and imaginary part interleaving on the multiple third symbols to obtain multiple fourth symbols; wherein, real parts and imaginary parts belonging to the same third symbol are dispersed to positions of real parts and imaginary parts of different fourth symbols; and
mapping the multiple fourth symbols onto multiple resource elements and performing transmission of information.

According to a second aspect of the embodiments of this disclosure, there is provided an information transmission apparatus suitable for nonorthogonal multiple access, the information transmission apparatus including:

a data modulating unit configured to modulate data to be transmitted into multiple constellation symbols;
a first rotating unit configured to rotate the multiple constellation symbols by a first predetermined angle respectively to obtain multiple first symbols;
a first interleaving unit configured to perform real part and imaginary part interleaving on the multiple first symbols to obtain multiple second symbols; wherein, real parts and imaginary parts belonging to the same first symbol are dispersed to positions of real parts and imaginary parts of different second symbols;
a second rotating unit configured to rotate the multiple second symbols by a second predetermined angle respectively to obtain multiple third symbols;
a second interleaving unit configured to perform real part and imaginary part interleaving on the multiple third symbols to obtain multiple fourth symbols; wherein, real parts and imaginary parts belonging to the same third symbol are dispersed to positions of real parts and imaginary parts of different fourth symbols; and
a resource mapping unit configured to map the multiple fourth symbols onto multiple resource elements and perform transmission of information.

According to a third aspect of the embodiments of this disclosure, there is provided a communication system, the communication system including:

a transmitting device configured with the information transmission apparatus as described above; and
a receiving device configured to receive and demodulate information transmitted by the transmitting device.

An advantage of the embodiments of this disclosure exists in that by performing rotation for a first time on multiple constellation symbols and performing real part and imaginary part interleaving on different symbols, and then performing rotation for a second time and performing real part and imaginary part interleaving on different symbols, higher diversity gains can be obtained, system performance can further be improved, and more UEs can be multiplexed.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of performing multiplexing by multiple UEs in the SCMA;
FIG. 2 is a schematic diagram of transmitting two codewords in the SCMA;
FIG. 3 is a flowchart of the information transmission method suitable for nonorthogonal multiple access of Embodiment 1 of this disclosure;
FIG. 4 is a schematic diagram of user resource mapping of Embodiment 1 of this disclosure;
FIG. 5 is another flowchart of the information transmission method suitable for nonorthogonal multiple access of Embodiment 1 of this disclosure;
FIG. 6 is a schematic diagram of user resource mapping of orthogonal multiple access;
FIG. 7 is a schematic diagram of user resource mapping of the SCMA;
FIG. 8 is a schematic diagram of comparison of an SCMA method and a dual-rotation method;
FIG. 9 is anther schematic diagram of comparison of the SCMA method and the dual-rotation method;
FIG. 10 is a further schematic diagram of comparison of the SCMA method and the dual-rotation method;
FIG. 11 is still another schematic diagram of comparison of the SCMA method and the dual-rotation method;
FIG. 12 is a schematic diagram of performing codeword interleaving of an embodiment of this disclosure;
FIG. 13 is another schematic diagram of performing codeword interleaving of the embodiment of this disclosure;
FIG. 14 is yet another schematic diagram of comparison of the SCMA method and the dual-rotation method;
FIG. 15 is a schematic diagram of the information transmission apparatus suitable for nonorthogonal multiple access of Embodiment 4 of this disclosure;
FIG. 16 is a schematic diagram of a structure of the UE of Embodiment 4 of this disclosure;
FIG. 17 is a schematic diagram of a structure of the base station of Embodiment 4 of this disclosure; and
FIG. 18 is a schematic diagram of the communication system of Embodiment 5 of this disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of the present disclosure, a base station may be referred to as an access point, a broadcast transmitter, a node B, or an evolution node B (eNB), etc., and may include some or all functions of them. A term "base station" shall be used in the text, and each base station provides communication coverage for a specific geographical region. A term "cell" may refer to a base station and/or a coverage region thereof, depending on the context using the term.

In the embodiments of the present disclosure, a mobile station or equipment may be referred to as a user equipment (UE). The UE may be fixed or mobile, and may also be referred to as a mobile station, a terminal, an access terminal, a user unit, or a station, etc. The UE may be a cellular phone, a personal digital assistant (PDA), a wireless modem, a wireless communication device, a handhold device, a lap-top computer, and a cordless telephone, etc.

In order to solve a problem of inter-UE interference resulted from occupying the same resource by multiple UEs, "a codeword" in the SCMA is constituted by using two-dimensional constellation points. For example, signals are rotated first to respectively generate signal copies at real parts and imaginary parts, and then the copies are transmitted on multiple resource elements. In this way, association may be established between symbols within the codeword, so as to resist interference produced when signals of multiple UEs are superimposed.

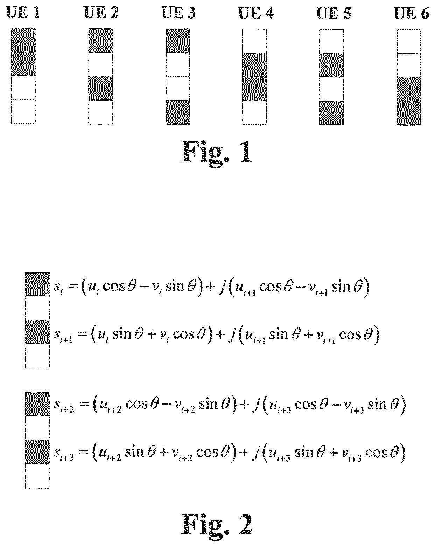

FIG. 1 is a schematic diagram of performing multiplexing by multiple UEs in the SCMA, in which each square denotes a time-frequency resource element, such as a resource element (RE) in an orthogonal frequency division multiplexing (OFDM) system.

As shown in FIG. 1, a blank represents a zero position, denoting that the UE does not transmit a signal on the resource element, or referred to as transmitting a zero symbol; and a shadow represents a non-zero position, denoting that the UE transmits a signal on the resource element, and non-zero symbols being transmitted. As shown in FIG. 1, four resource elements carry signals of total six UEs, and each UE transmits two non-zero symbols.

For a certain UE, it is assumed that the two non-zero symbols originally transmitted by the UE are:

$$c_i = u_i + jv_i,$$

$$c_{i+1} = u_{i+1} + jv_{i+1};$$

where, $u_i$ and $v_i$ are real numbers, $c_i$ is a complex number; $i$ and $i + 1$ are used to identify two consecutive symbols. And identity of the UE is omitted below on the premise of producing no confusion.

In order to perform SCMA transmission, phase rotation is first performed on the original symbols. Assuming that a rotation angle is $\theta$, the symbols after rotation are as follows:

$$\mathscr{C}_i = \left(u_i + jv_i\right)e^{j\theta} = \left(u_i\cos\theta - v_i\sin\theta\right) + j\left(u_i\sin\theta + v_i\cos\theta\right),$$

$$\mathscr{C}_{i+1} = \left(u_{i+1} + jv_{i+1}\right)e^{j\theta} = \left(u_{i+1}\cos\theta - v_{i+1}\sin\theta\right) + j\left(u_{i+1}\sin\theta + v_{i+1}\cos\theta\right).$$

Then, an imaginary part $\mathscr{C}_i$ and a real part of $\mathscr{C}_{i+1}$ are exchanged, and $s_i = (u_i\cos\theta - v_i\sin\theta) + j(u_{i+1}\cos\theta - v_{i+1}\sin\theta)$ and $s_{i+1} = (u_i\sin\theta + v_i\cos\theta) + j(u_{i+1}\sin\theta + v_{i+1}\cos\theta)$ are obtained.

Then $s_i$ and $s_{i+1}$ are mapped onto the two non-zero positions in FIG. 1 for transmission. Hence, a complete codeword of SCMA is obtained, including zero symbols and non-zero symbols.

For multiple UEs, each UE generates signals according to the above process, and the signals are mapped onto non-zero positions for transmission. For different UEs, as shown in FIG. 1, the non-zero positions onto which the signals are mapped are different. Actually, the four resource elements shown in FIG. 1 constitute a codeword, including zero symbols and non-zero symbols. Correspondingly, expressions of $s_i$ and $s_{i+1}$ are general formulae for transmitting non-zero symbols. In practical transmission, multiple codewords may be transmitted according a size of resource allocation.

FIG. 2 is a schematic diagram of transmitting two codewords in the SCMA, in which an example of continuously transmitting four non-zero symbols is shown. As shown in FIG. 2, the same signal component (such as $u_i$, or $v_i$, etc.) is dispersed onto two different resource elements for transmission.

The SCMA is illustrated above. It should be noted that the embodiments of this disclosure are not limited to transmission of SCMA, and are suitable for or applicable to any scenarios of nonorthogonal multiple access.

Embodiment 1

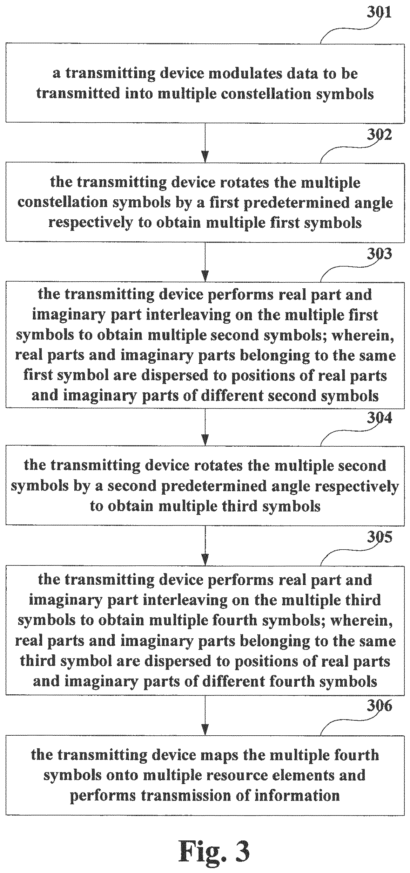

The embodiment of the present disclosure provides an information transmission method suitable for nonorthogonal multiple access, which shall be described from a side of a transmitting device. FIG. 3 is a flowchart of the information transmission method of the embodiment of this disclosure. As shown in FIG. 3, the information transmission method includes:

Block 301: a transmitting device modulates data to be transmitted into multiple constellation symbols.
Block 302: the transmitting device rotates the multiple constellation symbols by a first predetermined angle respectively to obtain multiple first symbols.
Block 303: the transmitting device performs real part and imaginary part interleaving on the multiple first symbols to obtain multiple second symbols; wherein, real parts and imaginary parts belonging to the same first symbol are dispersed to positions of real parts and imaginary parts of different second symbols.
Block 304: the transmitting device rotates the multiple second symbols by a second predetermined angle respectively to obtain multiple third symbols.
Block 305: the transmitting device performs real part and imaginary part interleaving on the multiple third symbols to obtain multiple fourth symbols; wherein, real parts and imaginary parts belonging to the same third symbol are dispersed to positions of real parts and imaginary parts of different fourth symbols; and
Block 306: the transmitting device maps the multiple fourth symbols onto multiple resource elements and performs transmission of information.

In this embodiment, multiple transmitting devices may perform the nonorthogonal multiple access (such as nonorthogonal multiple access based on sparsity). The transmitting device may be, for example, MTC UE, the MTC UE and other UE performing, for example, nonorthogonal transmission based on sparsity, with a receiving device; however, this disclosure is not limited thereto. Following description shall be given by only taking MTC UE and nonorthogonal multiple access based on sparsity as examples.

In this embodiment, the receiving device may be a macro base station (such as an eNB), and macro cells generated by the macro base station may serve for the UE; or the receiving device may also be a pico base station, and pico cells generated by the pico base station may serve for the UE; or the receiving device may also be another network device. However, this disclosure is not limited thereto, and a particular scenario may be determined according to an actual situation.

This disclosure shall be described below from a point of view of a UE by taking transmitting four symbols as an example.

It is assumed that the UE intended to transmit four original complex symbols:

$$c_i = u_i + jv_i,$$

$$c_{i+1} = u_{i+1} + jv_{i+1},$$

$$c_{i+2} = u_{i+2} + jv_{i+2},$$

$$c_{i+3} = u_{i+3} + jv_{i+3}.$$

For example, $c_i \sim c_{i+3}$ may be symbols from any constellations, such as binary phase shift keying (BPSK), quadrature phase shift keying (QPSK), 16 quadrature amplitude modulation (QAM), or 64QAM; however, this disclosure is not limited thereto. Furthermore, reference may be made to any related methods for how to modulate the constellation symbols, etc.

In block 302, assuming that the first predetermined angle is $\theta$, the multiple first symbols after the first time of rotation are:

$$\hat{c}_i = (u_i + jv_i)e^{j\theta} = (u_i \cos\theta - v_i \sin\theta) + j(u_i \sin\theta + v_i \cos\theta),$$

$$\dot{s}_{i+1} = \left(u_{i+1} + jv_{i+1}\right)e^{j\theta} = \left(u_{i+1}\cos\theta - v_{i+1}\sin\theta\right) + j\left(u_{i+1}\sin\theta + v_{i+1}\cos\theta\right),$$

$$\dot{s}_{i+2} = \left(u_{i+2} + jv_{i+2}\right)e^{j\theta} = \left(u_{i+2}\cos\theta - v_{i+2}\sin\theta\right) + j\left(u_{i+2}\sin\theta + v_{i+2}\cos\theta\right),$$

$$\dot{s}_{i+3} = \left(u_{i+3} + jv_{i+3}\right)e^{j\theta} = \left(u_{i+3}\cos\theta - v_{i+3}\sin\theta\right) + j\left(u_{i+3}\sin\theta + v_{i+3}\cos\theta\right).$$

And reference may be made to any related methods for how to rotate the constellation symbols (also referred to as constellation rotation or phase rotation).

In block 303, real part and imaginary part interleaving may be performed on two first symbols having different signal components, so as to obtain multiple second symbols.

For example, an imaginary part of $\dot{s}_i$ and a real part of $\dot{s}_{i+1}$ are exchanged, and an imaginary part of $\dot{s}_{i+2}$ and a real part of $\dot{s}_{i+3}$ are exchanged, then, the multiple second symbols are:

$$s_i = \left(u_i\cos\theta - v_i\sin\theta\right) + j\left(u_{i+1}\cos\theta - v_{i+1}\sin\theta\right),$$

$$s_{i+1} = \left(u_i\sin\theta + v_i\cos\theta\right) + j\left(u_{i+1}\sin\theta + v_{i+1}\cos\theta\right),$$

$$s_{i+2} = \left(u_{i+2}\cos\theta - v_{i+2}\sin\theta\right) + j\left(u_{i+3}\cos\theta - v_{i+3}\sin\theta\right),$$

$$s_{i+3} = \left(u_{i+2}\sin\theta + v_{i+2}\cos\theta\right) + j\left(u_{i+3}\sin\theta + v_{i+3}\cos\theta\right).$$

It should be noted that what described above is only one implementation of the embodiment of this disclosure; however, this disclosure is not limited thereto. For example, a real part of $\dot{s}_i$ and an imaginary part of $\dot{s}_{i+1}$ may be exchanged, a real part of $\dot{s}_{i+2}$ and an imaginary part of $\dot{s}_{i+3}$ may be exchanged; or an imaginary part of $\dot{s}_i$ and a real part of $\dot{s}_{i+2}$ may be exchanged, and an imaginary part of $\dot{s}_{i+1}$ and a real part of $\dot{s}_{i+3}$ may be exchanged, etc. And particular manner of imaginary part and real part interleaving may be determined according to an actual situation.

In block 304, assuming that the second predetermined angle is $\varphi$, the multiple third symbols after the second time of rotation are:

$$\dot{s}_i = s_i e^{j\varphi}$$
$$= \left(u_i\cos\varphi\cos\theta - v_i\cos\varphi\sin\theta - u_{i+1}\sin\varphi\cos\theta + v_{i+1}\sin\varphi\sin\theta\right),$$
$$+ j\left(u_i\sin\varphi\cos\theta - v_i\sin\varphi\sin\theta + u_{i+1}\cos\varphi\cos\theta - v_{i+1}\cos\varphi\sin\theta\right)$$

$$\overset{o}{s}_{i+1} = s_{i+1}e^{j\varphi}$$

$$= \left( u_i \cos\varphi\sin\theta + v_i \cos\varphi\cos\theta - u_{i+1}\sin\varphi\sin\theta - v_{i+1}\sin\varphi\cos\theta \right) \;,$$

$$+ j\left( u_i \sin\varphi\sin\theta + v_i \sin\varphi\cos\theta + u_{i+1}\cos\varphi\sin\theta + v_{i+1}\cos\varphi\cos\theta \right)$$

$$\overset{o}{s}_{i+2} = s_{i+2}e^{j\varphi}$$

$$= \left( u_{i+2}\cos\varphi\cos\theta - v_{i+2}\cos\varphi\sin\theta - u_{i+3}\sin\varphi\cos\theta + v_{i+3}\sin\varphi\sin\theta \right) \;,$$

$$+ j\left( u_{i+2}\sin\varphi\cos\theta - v_{i+2}\sin\varphi\sin\theta + u_{i+3}\cos\varphi\cos\theta - v_{i+3}\cos\varphi\sin\theta \right)$$

$$\overset{o}{s}_{i+3} = s_{i+3}e^{j\varphi}$$

$$= \left( u_{i+2}\cos\varphi\sin\theta + v_{i+2}\cos\varphi\cos\theta - u_{i+3}\sin\varphi\sin\theta - v_{i+3}\sin\varphi\cos\theta \right) \;.$$

$$+ j\left( u_{i+2}\sin\varphi\sin\theta + v_{i+2}\sin\varphi\cos\theta + u_{i+3}\cos\varphi\sin\theta + v_{i+3}\cos\varphi\cos\theta \right)$$

It should be noted that the above description is given by taking exchange of the imaginary part of $\overset{o}{s}_i$ and the real part of $\overset{o}{s}_{i+1}$ and exchange of the imaginary part of $\overset{o}{s}_{i+2}$ and the real part of $\overset{o}{s}_{i+3}$ as examples. And if the manners of imaginary part and real part interleaving in block 303 are different, the correspondingly obtained third symbols are also different.

In block 305, real part and imaginary part interleaving may be performed on two third symbols having different signal components, so as to obtain multiple fourth symbols.

For example, an imaginary part of $\overset{o}{s}_i$ and a real part of $\overset{o}{s}_{i+2}$ are exchanged, and an imaginary part of $\overset{o}{s}_{i+1}$ and a real part of $\overset{o}{s}_{i+3}$ are exchanged, then, the multiple fourth symbols are:

$$w_i = \left( u_i \cos\varphi\cos\theta - v_i \cos\varphi\sin\theta - u_{i+1}\sin\varphi\cos\theta + v_{i+1}\sin\varphi\sin\theta \right)$$

$$+ j\left( u_{i+2}\cos\varphi\cos\theta - v_{i+2}\cos\varphi\sin\theta - u_{i+3}\sin\varphi\cos\theta + v_{i+3}\sin\varphi\sin\theta \right)^,$$

$$w_{i+1} = \left( u_i \cos\varphi\sin\theta + v_i \cos\varphi\cos\theta - u_{i+1}\sin\varphi\sin\theta - v_{i+1}\sin\varphi\cos\theta \right)$$

$$+ j\left( u_{i+2}\cos\varphi\sin\theta + v_{i+2}\cos\varphi\cos\theta - u_{i+3}\sin\varphi\sin\theta - v_{i+3}\sin\varphi\cos\theta \right)^,$$

$$w_{i+2} = \left( u_i \sin\varphi\cos\theta - v_i \sin\varphi\sin\theta + u_{i+1}\cos\varphi\cos\theta - v_{i+1}\cos\varphi\sin\theta \right)$$

$$+ j\left( u_{i+2}\sin\varphi\cos\theta - v_{i+2}\sin\varphi\sin\theta + u_{i+3}\cos\varphi\cos\theta - v_{i+3}\cos\varphi\sin\theta \right)^,$$

$$w_{i+3} = \left(u_i \sin\varphi\sin\theta + v_i \sin\varphi\cos\theta + u_{i+1}\cos\varphi\sin\theta + v_{i+1}\cos\varphi\cos\theta\right)$$
$$+ j\left(u_{i+2}\sin\varphi\sin\theta + v_{i+2}\sin\varphi\cos\theta + u_{i+3}\cos\varphi\sin\theta + v_{i+3}\cos\varphi\cos\theta\right).$$

It should be noted that what described above is only one implementation of the embodiment of this disclosure; however, this disclosure is not limited thereto. For example, the real part of $\theta_i^{\theta}$ and the imaginary part of $\theta_{i+2}^{\theta}$ may be exchanged, the real part of $\theta_{i+1}^{\theta}$ and the imaginary part of $\theta_{i+3}^{\theta}$ may be exchanged; or the imaginary part of $\theta_i^{\theta}$ and the real part of $\theta_{i+3}^{\theta}$ may be exchanged, and the imaginary part of $\theta_{i+1}^{\theta}$ and the real part of $\theta_{i+2}^{\theta}$ may be exchanged, etc.

In block 306, the multiple fourth symbols may be respectively mapped onto the multiple resource elements.

For example, N fourth symbols may be mapped onto N resource elements in M time-frequency resource elements, and other resource elements transmit zero symbols; where, M and N are positive integers, and M is greater than N. However, this disclosure is not limited thereto; for example, "a non-SCMA" manner may also be used for mapping.

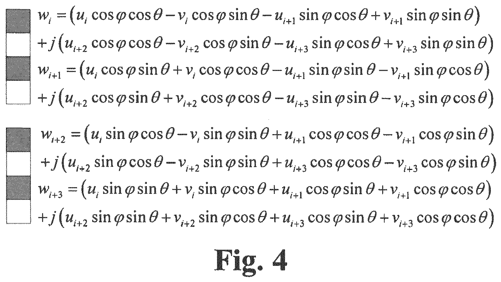

FIG. 4 is a schematic diagram of user resource mapping of the embodiment of this disclosure. As shown in FIG. 4, $w_i$ to $w_{i+3}$ are mapped onto four non-zero resource positions for transmission; wherein, the same signal component (such as $u_i$) is dispersed onto four different resource elements for transmission. In comparison with the SCMA method shown in FIG. 2 where $u_i$ is dispersed onto two different resource elements for transmission, the method shown in FIG. 4 (which may be referred to as a dual rotation method) is able to obtain a higher diversity gain, thereby improving demodulation performance of the UE, and making it possible to multiplex more UEs.

The above description is given from a point of view of a single UE. For cases of multiple UEs, each UE executes blocks 301-305; and in block 305, positions of non-zero resources onto which symbols are mapped by different UEs are different, hence, nonorthogonal multiple access may be performed.

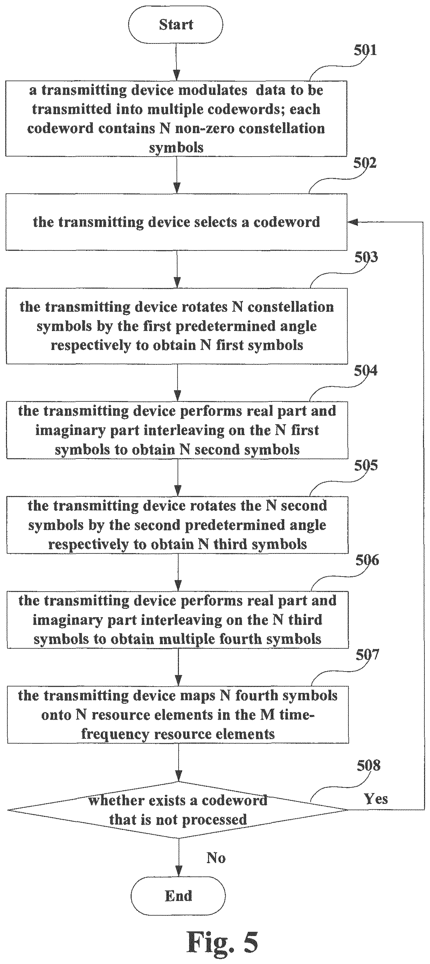

FIG. 5 is another flowchart of the information transmission method of the embodiment of this disclosure, in which a case where the data to be transmitted are modulated into multiple codewords is shown. As shown in FIG. 5, the information transmission method includes:

Block 501: a transmitting device modulates data to be transmitted into multiple codewords; each codeword contains N non-zero constellation symbols, N being a positive integer.

Block 502: the transmitting device selects a codeword.

Block 503: the transmitting device rotates N constellation symbols of the codeword by the first predetermined angle respectively to obtain N first symbols.

Block 504: the transmitting device performs real part and imaginary part interleaving on the N first symbols to obtain N second symbols; real parts and imaginary parts belonging to the same first symbol are dispersed to positions of real parts and imaginary parts of different second symbols.

Block 505: the transmitting device rotates the N second symbols by the second predetermined angle respectively to obtain N third symbols.

Block 506: the transmitting device performs real part and imaginary part interleaving on the N third symbols to obtain multiple fourth symbols; real parts and imaginary parts belonging to the same third symbol are dispersed to positions of real parts and imaginary parts of different fourth symbols; and

Block 507: the transmitting device maps N fourth symbols onto N resource elements in the M time-frequency resource elements; where, M and N are positive integers, and M is greater than N; and after performing the resource mapping, the symbols may be transmitted correspondingly, and reference may be made to any related methods for how to map and how to transmit the information.

Block 508: it is determined whether there exists a codeword that is not processed, and if yes, executing block 502 to select another codeword to proceed with processing; otherwise, completing this time of transmission process.

It should be noted that FIG. 5 only schematically explains the embodiment of this disclosure; however, this disclosure is not limited thereto. For example, an order of execution of the blocks or steps may be appropriately adjusted, and furthermore, some other blocks or steps may be added, or some of these blocks or steps may be reduced. And appropriate modifications may be made by those skilled in the art according to what is described above, without being limited to those contained in the above figure.

It can be seen from the above embodiment that by performing rotation for a first time and interleaving on multiple constellation symbols, the real part and imaginary part originally belonging to the same first symbol are dispersed to real part and imaginary part positions of different second symbols, and then by performing rotation for a second time and interleaving, the real part and imaginary part originally belonging to the same third symbol are dispersed to real part and imaginary part positions of different fourth symbols. Hence, higher diversity gains can be obtained, system performance can further be improved, and more UEs can be multiplexed.

Embodiment 2

This embodiment shall be described on the basis of Embodiment 1. In this embodiment, an effect of this disclosure and how to determine a rotation angle shall be described by taking that MTC UE uses BPSK symbols as an example.

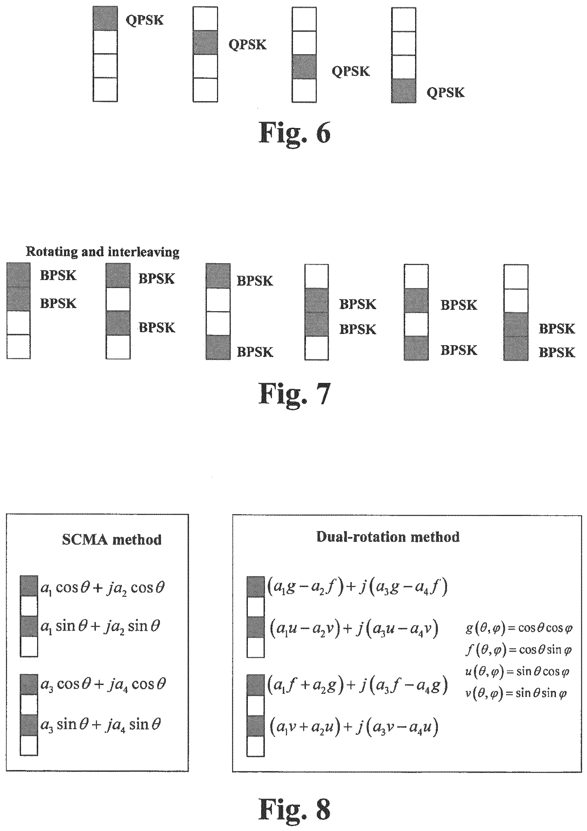

FIG. 6 is a schematic diagram of user resource mapping of orthogonal multiple access. As shown in FIG. 6, in an orthogonal multiple access mode, the MTC UE usually uses QPSK symbols to perform transmission, four resource elements are able to multiplex four UEs, and each UE uses one resource element.

FIG. 7 is a schematic diagram of user resource mapping of the SCMA. As shown in FIG. 7, in the SCMA mode, each MTC UE uses two resource elements, a transmitted signal is formed by rotating and interleaving two BPSK symbols, and four resource elements are able to multiplex six UEs.

In this embodiment, a single UE is still taken as an example, and a UE ID is omitted. And it is assumed that the UE is intended to transmit original four BPSK symbols, $a_1$, $a_2$, $a_3$ and $a_4$; where, $a_1 \sim a_4$ are from a BPSK constellation.

First, first-stage constellation rotation may be performed. Assuming that a rotation angle is $\theta$, symbols after the rotation are denoted as:

$$a_1' = a_1 \cos\theta + ja_1 \sin\theta,$$

$$a_2' = a_2 \cos\theta + ja_2 \sin\theta,$$

$$a_3' = a_3 \cos\theta + ja_3 \sin\theta,$$

$$a_4' = a_4 \cos\theta + ja_4 \sin\theta.$$

Then, imaginary part and real part interleaving may be performed. A manner of interleaving may be, for example, exchanging an imaginary part of $a_1'$ and a real part of $a_2'$, and exchanging an imaginary part of $a_3'$ and a real part of $a_4'$. Hence, it may be obtained that,

$$s_1 = a_1 \cos\theta + ja_2 \cos\theta,$$

$$s_2 = a_1 \sin\theta + ja_2 \sin\theta,$$

$$s_3 = a_3 \cos\theta + ja_4 \cos\theta,$$

$$s_4 = a_3 \sin\theta + ja_4 \sin\theta.$$

Next, second-stage constellation rotation may be performed. Assuming that a rotation angle is $\varphi$, symbols after the rotation are denoted as:

$$\tilde{s}_1 = \left(a_1\cos\varphi\cos\theta - a_2\sin\varphi\cos\theta\right) + j\left(a_1\sin\varphi\cos\theta + a_2\cos\varphi\cos\theta\right),$$

$$\tilde{s}_2 = \left(a_1\cos\varphi\sin\theta - a_2\sin\varphi\sin\theta\right) + j\left(a_1\sin\varphi\sin\theta + a_2\cos\varphi\sin\theta\right),$$

$$\tilde{s}_3 = \left(a_3\cos\varphi\cos\theta - a_4\sin\varphi\cos\theta\right) + j\left(a_3\sin\varphi\cos\theta + a_4\cos\varphi\cos\theta\right),$$

$$\tilde{s}_4 = \left(a_3\cos\varphi\sin\theta - a_4\sin\varphi\sin\theta\right) + j\left(a_3\sin\varphi\sin\theta + a_4\cos\varphi\sin\theta\right).$$

Next, imaginary part and real part interleaving may be performed. A manner of interleaving may be, for example, exchanging the imaginary part of $\tilde{s}_1$ and a real part of $\tilde{s}_3$, and exchanging an imaginary part of $\tilde{s}_2$ and the real part of $\tilde{s}_4$. Hence, it may be obtained that,

$$w_1 = \left(a_1\cos\varphi\cos\theta - a_2\sin\varphi\cos\theta\right) + j\left(a_3\cos\varphi\cos\theta - a_4\sin\varphi\cos\theta\right),$$

$$w_2 = \left(a_1\cos\varphi\sin\theta - a_2\sin\varphi\sin\theta\right) + j\left(a_3\cos\varphi\sin\theta - a_4\sin\varphi\sin\theta\right),$$

$$w_3 = \left(a_1\sin\varphi\cos\theta + a_2\cos\varphi\cos\theta\right) + j\left(a_3\sin\varphi\cos\theta + a_4\cos\varphi\cos\theta\right),$$

$$w_4 = \left(a_1\sin\varphi\sin\theta + a_2\cos\varphi\sin\theta\right) + j\left(a_3\sin\varphi\sin\theta + a_4\cos\varphi\sin\theta\right).$$

Thereafter, $w_1 \sim w_4$ may be mapped onto the four non-zero resource positions and transmitted.

Multiple UEs may respectively perform the above operations, and non-zero resource positions of different UEs are different. Hence, the nonorthogonal multiple access (such as nonorthogonal multiple access based on sparsity) may be performed.

FIG. 8 is a schematic diagram of comparison of the SCMA method and the dual-rotation method, in which a case taking a single UE as an example is shown. As shown in FIG. 8, taking $a_1$ as an example, it is transmitted on two resource elements in the SCMA method, and is transmitted on four resource elements in the dual-rotation method in the embodiment of this disclosure. Hence, in comparison with the SCMA method, the dual-rotation method in the embodiment of this disclosure has a higher diversity effect theoretically.

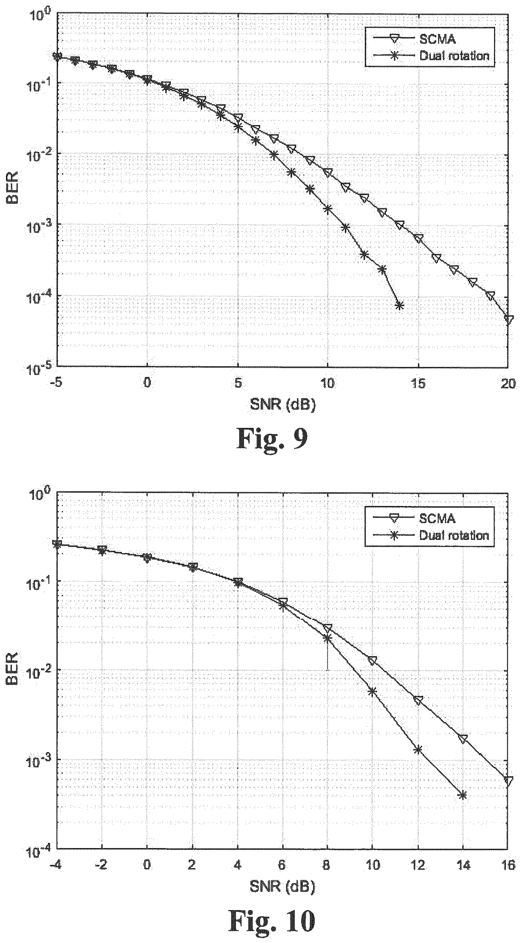

FIG. 9 is another schematic diagram of comparison of the SCMA method and the dual-rotation method, in which bit error rate (BER) performance curves of the SCMA method and the dual-rotation method of the embodiment of this disclosure under a condition of a single UE are shown; it is assumed that channels are subject to independent-identically-distributed Rayleigh distribution.

FIG. 10 is a further schematic diagram of comparison of the SCMA method and the dual-rotation method, in which bit error rate performance curves of the SCMA method and the dual-rotation method of the embodiment of this disclosure under a condition of multiple UEs (the number of UEs is 6) are shown; it is assumed that channels are subject to independent-identically-distributed Rayleigh distribution.

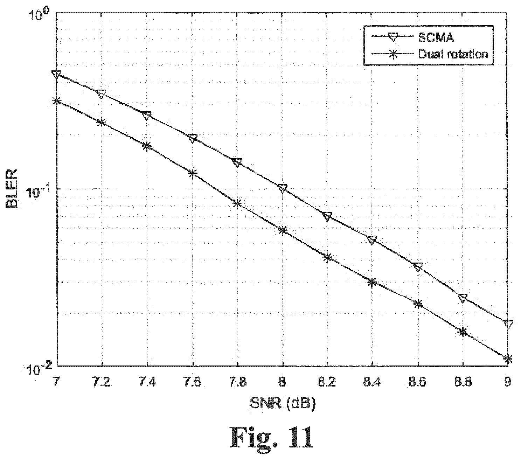

FIG. 11 is still another schematic diagram of comparison of the SCMA method and the dual-rotation method, in which block error rate (BLER) performance curves of the SCMA method and the dual-rotation method of the embodiment of this disclosure under a condition of multiple UEs (the number of UEs is 6) are shown; it is assumed that channels are subject to independent-identically-distributed Rayleigh distribution, and Turbo channel coding meeting the LTE standard is used, with a code rate being 0.795.

Simulation results shown in FIGs. 9-11 verify effectiveness of the dual-rotation method of the embodiment of this disclosure. By using the dual-rotation method of the embodiment of this disclosure, demodulation performance of the UE is improved, thereby making it possible to multiplex more UEs.

The dual-rotation method of the embodiment of this disclosure is described above theoretically by way of the simulation results, and how to determine the rotation angles shall be described below schematically.

In this embodiment, the first predetermined angle and the second predetermined angle may be determined based on a symbol error rate. For example, in a case where the constellation symbols are BPSK symbols and a signal to noise ratio is greater than a predetermined value, the first predetermined angle is 45°, and the second predetermined angle is 60°.

A derivation process shall be described below in brief.

Let vectors $\mathbf{x} = [x_1\ x_2\ x_3\ x_4]^T$ and $\mathbf{a}_{1\&2} = [a_1\ a_2]^T$, for symbols $a_1$ and $a_2$, dual-rotation transformation may be equivalently denoted by $\mathbf{x} = \mathbf{G}\mathbf{a}_{1\&2}$; where,

$$\mathbf{G} = \begin{bmatrix} \cos\varphi\cos\theta & -\sin\varphi\cos\theta \\ \cos\varphi\sin\theta & -\sin\varphi\sin\theta \\ \sin\varphi\cos\theta & \cos\varphi\cos\theta \\ \sin\varphi\sin\theta & \cos\varphi\sin\theta \end{bmatrix}.$$

Actually, $\mathbf{x} = \Re\{\mathbf{w}\}$; where, $\mathbf{w} = [w_1\ w_2\ w_3\ w_4]^T$, that is, a real part of $\mathbf{w}$ is denoted as a product of the matrix $\mathbf{G}$ and a vector consisting of two BPSK symbols. Likewise, an imaginary part of $\mathbf{w}$ may also be denoted as a product of the matrix $\mathbf{G}$ and a vector consisting of two BPSK symbols.

Demodulation of $a_1$ and $a_2$ is only dependent on the real part of $\mathbf{w}$, and demodulation of $a_3$ and $a_4$ is only dependent on the imaginary part of $\mathbf{w}$, hence, any path may be selected for analysis.

As $a_1$ and $a_2$ are taken from a BPSK constellation, the vector $\mathbf{a}_{1\&2}$ may have four possible values, which makes that $\mathbf{x}$ has four possible values, that is, $\mathbf{x} \in \{\mathbf{x}^{(l)}|l=1,2,3,4\}$. When $\mathbf{x}^{(i)}$ is misjudged as $\mathbf{x}^{(k)}$, an error may occur in the demodulation of $a_1$ and $a_2$. An error probability shall be calculated below.

As elements of $\mathbf{x}$ are transmitted on different resource elements, they experience different channels. Assuming that experienced channels are subject to independent-identically-distributed Rayleigh fading, a probability of misjudging $\mathbf{x}^{(i)}$ as $\mathbf{x}^{(k)}$ may be denoted by:

$$P\left(\mathbf{x}^{(i)} \to \mathbf{x}^{(k)}\right) \leq \frac{1}{2}\prod_{n=1}^{4}\frac{1}{1+\rho\left(x_n^{(i)}-x_n^{(k)}\right)^2\big/4};$$

where, $\rho$ denotes a signal to noise ratio (SNR). Hence, an average error probability may be denoted by:

$$P_e \leq \frac{1}{4}\sum_{i=1}^{4}\sum_{k=1,k\neq i}^{4} P\left(\mathbf{x}^{(i)} \to \mathbf{x}^{(k)}\right) = \frac{1}{8}\sum_{i=1}^{4}\sum_{k=1,k\neq i}^{4}\prod_{n=1}^{4}\frac{1}{1+\rho\left(x_n^{(i)}-x_n^{(k)}\right)^2\big/4}.$$

$$U(\varphi,\theta) = \frac{1}{8}\sum_{i=1}^{4}\sum_{k=1,k\neq i}^{4}\prod_{n=1}^{4}\frac{1}{1+\rho\left(x_n^{(i)}-x_n^{(k)}\right)^2\big/4},$$

Let and actually, $U(\varphi,\theta)$ is a function of the rotation angles $\varphi$ and $\theta$, hence, the rotation angles may be obtained by minimizing the average error probability, that is,

$$\left(\varphi^*,\theta^*\right) = \arg\min_{\varphi,\theta} U(\varphi,\theta).$$

Let $\rho$ = 30$dB$, that is, it is set to be of a higher signal to noise ratio, a group of feasible rotation angle values may be solved, and the rotation angle values are $\varphi$ = 60°, $\theta$ = 45°.

It should be noted that how to determine the first predetermined angle and the second predetermined angle is illustrated above. However, this disclosure is not limited thereto, and other methods for determining angles may also be used. And furthermore, the rotation angles are not limited to 45° and 60°, other angles may also be used, and particular values may be determined according to an actual situation.

Embodiment 3

This embodiment shall be described on the basis of embodiments 1 and 2, in which how to perform resource mapping is further explained.

In this embodiment, in mapping multiple fourth symbols onto multiple resource elements, fourth symbols containing the same signal components may be dispersedly mapped onto unneighboring resource elements experiencing independent or uncorrelated channel fading. And the resource mapping method is also suitable for or applicable to the conventional SCMA method.

For example, in mapping symbols (which may be $s_i$, etc., in the SCMA, or may be $w_i$, etc., in the embodiments of this disclosure) onto non-zero resources for transmission, symbol interleaving may be performed, so that symbols containing the same signal components are mapped onto resource elements experiencing independent or uncorrelated channel fading as possible, that is, the same codeword is dispersed onto unneighboring resource elements experiencing independent or uncorrelated channel fading for transmission.

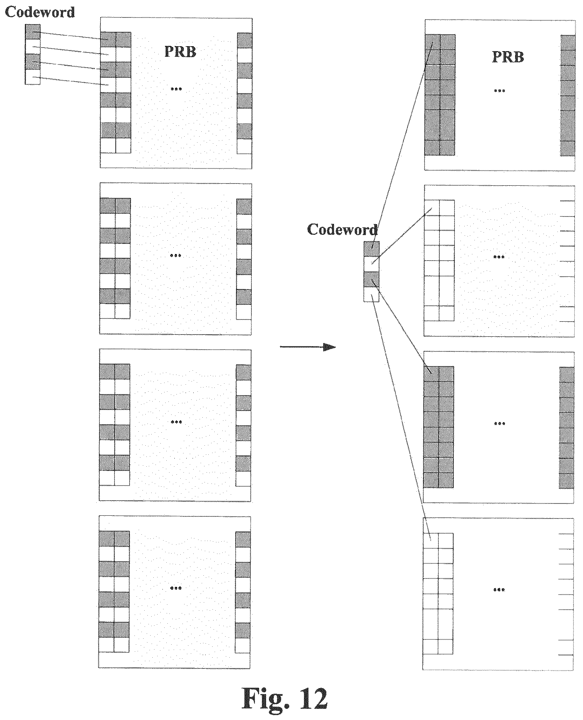

FIG. 12 is a schematic diagram of performing codeword interleaving of the embodiment of this disclosure, in which a case taking the SCMA as an example is shown. As shown by the left side in FIG. 12, symbols (including zero symbols and non-zero symbols) belonging to the same codeword in the conventional SCMA method (a method in which no codeword interleaving is performed) are mapped onto consecutive resource elements, and so on, and multiple codewords will fill in all resource block pairs allocated for the UE.

As shown by the right side in FIG. 12, in the embodiment of this disclosure, symbols (including zero symbols and non-zero symbols) belonging to the same codeword will be mapped into different resource block pairs, hence, the symbols experience unrelated channel fading as possible, thereby further utilizing diversity.

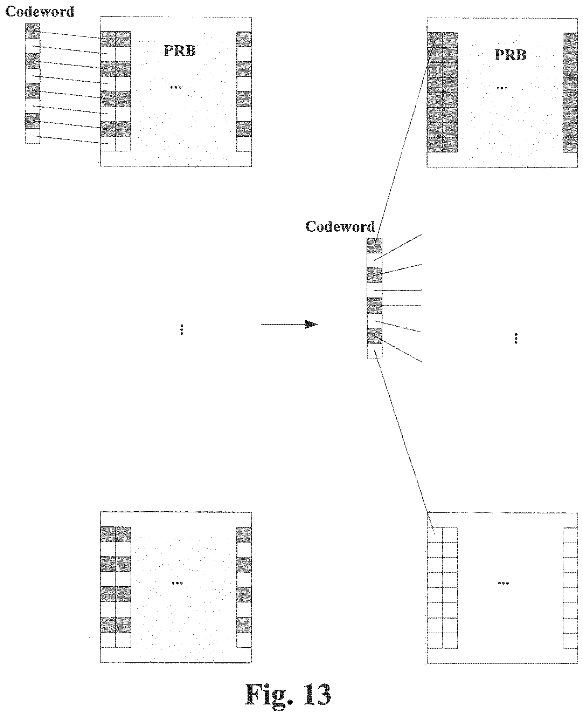

FIG. 13 is another schematic diagram of performing codeword interleaving of the embodiment of this disclosure, in which a case taking the dual-rotation method of the embodiment of this disclosure as an example is shown. As shown by the left side in FIG. 13, in the method where no codeword interleaving is performed, symbols (including zero symbols and non-zero symbols) belonging to the same codeword will be mapped into consecutive resource elements, and so on, and multiple codewords will fill in all resource block pairs allocated for the UE.

As shown by the right side in FIG. 13, in the embodiment of this disclosure, symbols containing the same signal components may be dispersed onto four non-zero resource elements for transmission, hence, eight symbols (including zero symbols and non-zero symbols) may be deemed as an equivalent codeword, and then the equivalent codeword is interleaved. After being interleaved, eight symbols belonging to the same codeword will be dispersed onto different resource block pairs for transmission.

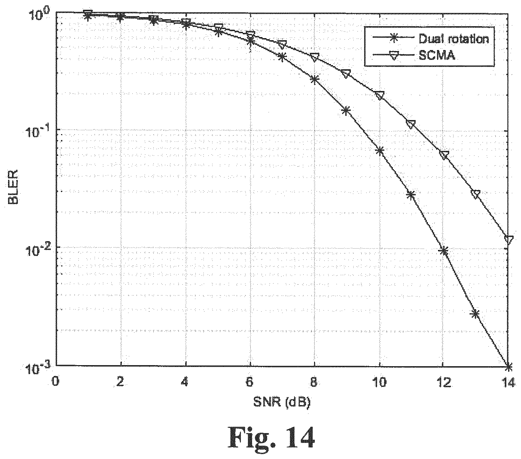

FIG. 14 is yet another schematic diagram of comparison of the SCMA method and the dual-rotation method of the embodiment of this disclosure, in which a performance simulation result after codeword interleaving is used. It is assumed that an ETU 120 km/h channel is used, and LTE Turbo channel coding is used, with a code rate being 0.795.

As shown in FIG. 14, the dual-rotation method after codeword interleaving has a better performance than the conventional SCMA method; and in comparison with FIG. 11, the method after codeword interleaving has a better performance than the method where no codeword interleaving is performed (for example, the block error rate is lower), thereby further obtaining diversity gains.

Embodiment 4

The embodiment of this disclosure provides an information transmission apparatus suitable for nonorthogonal multiple access. This embodiment corresponds to the information transmission method suitable for nonorthogonal multiple access in embodiments 1-3, with identical contents being not going to be described herein any further.

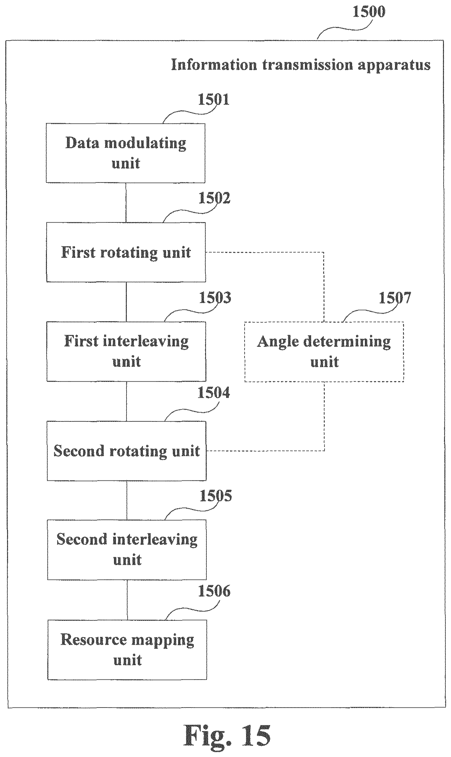

FIG. 15 is a schematic diagram of the information transmission apparatus suitable for nonorthogonal multiple access of the embodiment of this disclosure. As shown in FIG. 15, the information transmission apparatus 1500 includes:

a data modulating unit 1501 configured to modulate data to be transmitted into multiple constellation symbols;
a first rotating unit 1502 configured to rotate the multiple constellation symbols by a first predetermined angle respectively to obtain multiple first symbols;
a first interleaving unit 1503 configured to perform real part and imaginary part interleaving on the multiple first symbols to obtain multiple second symbols; wherein, real parts and imaginary parts belonging to the same first symbol are dispersed to positions of real parts and imaginary parts of different second symbols;

a second rotating unit 1504 configured to rotate the multiple second symbols by a second predetermined angle respectively to obtain multiple third symbols;

a second interleaving unit 1505 configured to perform real part and imaginary part interleaving on the multiple third symbols to obtain multiple fourth symbols; wherein, real parts and imaginary parts belonging to the same third symbol are dispersed to positions of real parts and imaginary parts of different fourth symbols; and

a resource mapping unit 1506 configured to map the multiple fourth symbols onto multiple resource elements and perform transmission of information.

In this embodiment, the data to be transmitted may be modulated into multiple codewords, each codeword including N non-zero constellation symbols, N being a positive integer.

In this embodiment, each N fourth symbols may be mapped onto N resource elements in M time-frequency resource elements for transmission; where, M is a positive integer, and M is greater than N. however, this embodiment is not limited thereto.

As shown in FIG. 15, the information transmission apparatus 1500 may further include:

an angle determining unit 1507 configured to determine the first predetermined angle and the second predetermined angle based on a symbol error rate.

In this embodiment, the resource mapping unit 506 may further be configured to: dispersedly map fourth symbols containing the same signal components onto unneighboring resource elements experiencing independent or uncorrelated channel fading. Resource elements contained in the same codeword are from different physical resource block (PRB) pairs and are located at unneighboring time-frequency positions away from each other.

This embodiment further provides a transmitting device, configured with the above-described information transmission apparatus 1500. The transmitting device may be, for example, a UE, such as MTC UE, and a receiving device may be a base station.

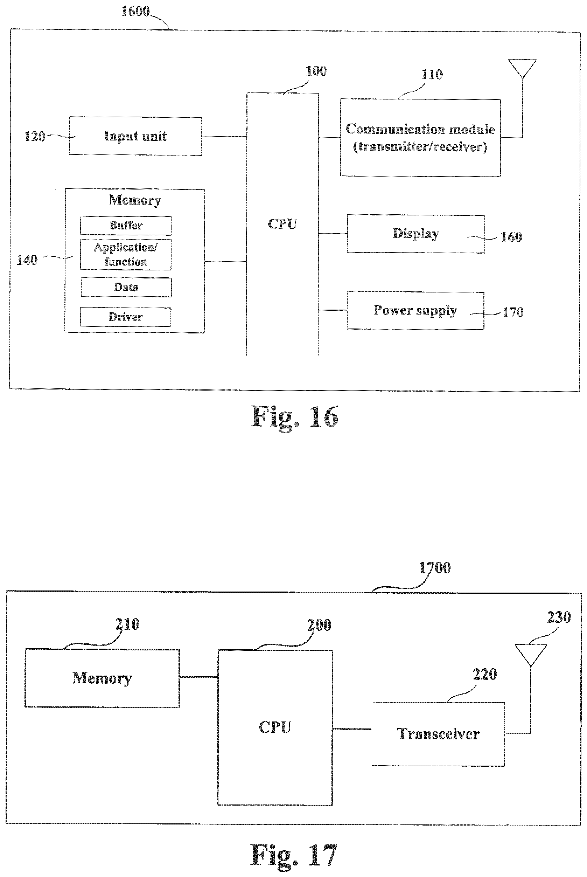

FIG. 16 is a schematic diagram of the UE of the embodiment of this disclosure. As shown in FIG. 16, the UE 1600 may include a central processing unit 100 and a memory 140, the memory 140 being coupled to the central processing unit 100. It should be noted that this figure is illustrative only, and other types of structures may also be used, so as to supplement or replace this structure and achieve a telecommunications function or other functions.

In one implementation, the functions of the information transmission apparatus 1500 may be integrated into the central processing unit 100. The central processing unit 100 may be configured to carry out the information transmission method suitable for nonorthogonal multiple access described in embodiments 1-3.

For example, the central processing unit 100 may be configured to perform the following control: modulating data to be transmitted into multiple constellation symbols; rotating the multiple constellation symbols by a first predetermined angle respectively to obtain multiple first symbols; performing real part and imaginary part interleaving on the multiple first symbols to obtain multiple second symbols; wherein, real parts and imaginary parts belonging to the same first symbol are dispersed to positions of real parts and imaginary parts of different second symbols; rotating the multiple second symbols by a second predetermined angle respectively to obtain multiple third symbols; performing real part and imaginary part interleaving on the multiple third symbols to obtain multiple fourth symbols; wherein, real parts and imaginary parts belonging to the same third symbol are dispersed to positions of real parts and imaginary parts of different fourth symbols; and mapping the multiple fourth symbols onto multiple resource elements and performing transmission of information.

In another implementation, the information transmission apparatus 1500 and the central processing unit 100 may be configured separately. For example, the information transmission apparatus 1500 may be configured as a chip connected to the central processing unit 100, with its functions being realized under control of the central processing unit 100.

As shown in FIG. 16, the UE 1600 may further include a communication module 110, an input unit 120, a memory 140, a display 160 and a power supply 170. Functions of the above components are similar to those in the relevant art, and shall not be described herein any further. It should be noted that the UE 1600 does not necessarily include all the parts shown in FIG. 16, and furthermore, the UE 1600 may include parts not shown in FIG. 16, and the relevant art may be referred to.

In an embodiment, the transmitting device may also be, for example, a base station, and the receiving device may be a UE, such as MTC UE. However, this disclosure is not limited thereto, and the transmitting device and the receiving device may also be other network devices.

FIG. 17 is a schematic diagram of a structure of the base station of the embodiment of this disclosure. As shown in FIG. 17, the base station 1700 may include a central processing unit (CPU) 200 and a memory 210, the memory 210 being coupled to the central processing unit 200. The memory 210 may store various data, and furthermore, it may store a program for information processing, and execute the program under control of the central processing unit 200.

The information transmission apparatus 1500 may carry out the information transmission method applicable to nonorthogonal multiple access described in Embodiment 1. And the central processing unit 200 may be configured to carry out the functions of the information transmission apparatus 1500.

Furthermore, as shown in FIG. 17, the base station 1700 may include a transceiver 220, and an antenna 230, etc. Functions of the above components are similar to those in the relevant art, and shall not be described herein any further. It should be noted that the base station 1700 does not necessarily include all the parts shown in FIG. 17, and furthermore, the base station 1700 may include parts not shown in FIG. 17, and the relevant art may be referred to.

It can be seen from the above embodiment that by performing rotation for a first time and interleaving on multiple constellation symbols, the real part and imaginary part originally belonging to the same first symbol are dispersed to real part and imaginary part positions of different second symbols, and then by performing rotation for a second time and interleaving, the real part and imaginary part originally belonging to the same third symbol are dispersed to real part and imaginary part positions of different fourth symbols. Hence, higher diversity gains can be obtained, system performance can further be improved, and more UEs can be multiplexed.

Embodiment 5

The embodiment of this disclosure further provides a communication system, with contents identical to those in embodiments 1-4 being not going to be described herein any further.

In this embodiment, the communication system may include:

> a transmitting device configured with the information transmission apparatus 1500 as described in Embodiment 4; and
> a receiving device configured to receive and demodulate information transmitted by the transmitting device.

In this embodiment, multiple transmitting devices may respectively map fourth symbols onto multiple resource elements for performing nonorthogonal multiple access. The transmitting device may be, for example, a UE, such as MTC UE, and the receiving device may be a base station; however, this disclosure is not limited thereto.

Following description shall be given by taking that the transmitting device is a UE and the receiving device is a base station as an example.

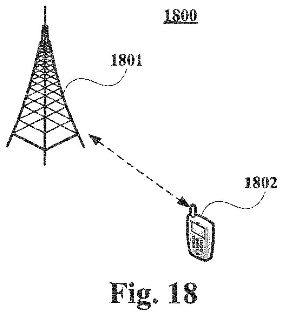

FIG. 18 is a schematic diagram of the communication system of the embodiment of this disclosure. As shown in FIG. 18, the communication system 1800 may include a base station 1801 and a UE 1802.

The UE 1802 may modulate data to be transmitted into multiple constellation symbols; rotate the multiple constellation symbols by a first predetermined angle respectively to obtain multiple first symbols; perform real part and imaginary part interleaving on the multiple first symbols to obtain multiple second symbols; wherein, real parts and imaginary parts belonging to the same first symbol are dispersed to positions of real parts and imaginary parts of different second symbols; rotate the multiple second symbols by a second predetermined angle respectively to obtain multiple third symbols; perform real part and imaginary part interleaving on the multiple third symbols to obtain multiple fourth symbols; wherein, real parts and imaginary parts belonging to the same third symbol are dispersed to positions of real parts and imaginary parts of different fourth symbols; and map the multiple fourth symbols onto multiple resource elements and perform transmission of information.

And the base station 1801 receives information transmitted by the UE 1802, and correspondingly demodulates the received information.

An embodiment of the present disclosure provides a computer readable program, which, when executed in a transmitting device, will cause a computer unit to carry out the information transmission method suitable for nonorthogonal multiple access described in Embodiment 1 in the transmitting device.

An embodiment of the present disclosure provides a computer storage medium, including a computer readable program, which will cause a computer unit to carry out the information transmission method suitable for nonorthogonal multiple access described in Embodiment 1 in a transmitting device.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The method for random access and data transmission carried out in the apparatus for random access and data transmission described with reference to the embodiments of this disclosure may be directly embodied as hardware, software modules executed by a processor, or a combination thereof. For example, one or more functional block diagrams and/or one or more combinations of the functional block diagrams shown in FIG. 15 (such as the data modulating unit, resource mapping unit, etc.) may either correspond to software modules of procedures of a computer program, or correspond to hardware modules. Such software modules may respectively correspond to the steps shown in FIG. 3.

And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in figures may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

**Claims**

1. An information transmission method suitable for nonorthogonal multiple access, comprising:

    modulating data to be transmitted into multiple constellation symbols by a transmitting device;
    rotating the multiple constellation symbols by a first predetermined angle respectively to obtain multiple first symbols;
    performing real part and imaginary part interleaving on the multiple first symbols to obtain multiple second symbols; wherein, real parts and imaginary parts belonging to the same first symbol are dispersed to positions of real parts and imaginary parts of different second symbols;
    rotating the multiple second symbols by a second predetermined angle respectively to obtain multiple third symbols;
    performing real part and imaginary part interleaving on the multiple third symbols to obtain multiple fourth symbols; wherein, real parts and imaginary parts belonging to the same third symbol are dispersed to positions of real parts and imaginary parts of different fourth symbols; and
    mapping the multiple fourth symbols onto multiple resource elements and performing transmission of information.

2. The information transmission method according to claim 1, wherein each N fourth symbols are mapped onto N resource elements in M time-frequency resource elements to form a codeword; where, M and N are positive integers, and M is greater than N.

3. The information transmission method according to claim 1, wherein the multiple constellation symbols comprise:

$$c_i = u_i + jv_i, \quad c_{i+1} = u_{i+1} + jv_{i+1}, \quad c_{i+2} = u_{i+2} + jv_{i+2} \quad \text{and} \quad c_{i+3} = u_{i+3} + jv_{i+3};$$

then, the multiple first symbols comprise:

$$\tilde{c}_i = \left( u_i + jv_i \right) e^{j\theta} = \left( u_i \cos\theta - v_i \sin\theta \right) + j \left( u_i \sin\theta + v_i \cos\theta \right),$$

$$s'_{i+1} = \left(u_{i+1} + jv_{i+1}\right)e^{j\theta} = \left(u_{i+1}\cos\theta - v_{i+1}\sin\theta\right) + j\left(u_{i+1}\sin\theta + v_{i+1}\cos\theta\right),$$

$$s'_{i+2} = \left(u_{i+2} + jv_{i+2}\right)e^{j\theta} = \left(u_{i+2}\cos\theta - v_{i+2}\sin\theta\right) + j\left(u_{i+2}\sin\theta + v_{i+2}\cos\theta\right),$$

$$s'_{i+3} = \left(u_{i+3} + jv_{i+3}\right)e^{j\theta} = \left(u_{i+3}\cos\theta - v_{i+3}\sin\theta\right) + j\left(u_{i+3}\sin\theta + v_{i+3}\cos\theta\right);$$

and the multiple second symbols comprise:

$$s_i = \left(u_i\cos\theta - v_i\sin\theta\right) + j\left(u_{i+1}\cos\theta - v_{i+1}\sin\theta\right),$$

$$s_{i+1} = \left(u_i\sin\theta + v_i\cos\theta\right) + j\left(u_{i+1}\sin\theta + v_{i+1}\cos\theta\right),$$

$$s_{i+2} = \left(u_{i+2}\cos\theta - v_{i+2}\sin\theta\right) + j\left(u_{i+3}\cos\theta - v_{i+3}\sin\theta\right),$$

$$s_{i+3} = \left(u_{i+2}\sin\theta + v_{i+2}\cos\theta\right) + j\left(u_{i+3}\sin\theta + v_{i+3}\cos\theta\right);$$

where, $\theta$ is the first predetermined angle, $i$ is a positive integer, and $u_i$ and $v_i$ are a real part and an imaginary part of a symbol, respectively.

4. The information transmission method according to claim 3, wherein the multiple third symbols comprise:

$$s'_i = s_i e^{j\varphi}$$
$$= \left(u_i\cos\varphi\cos\theta - v_i\cos\varphi\sin\theta - u_{i+1}\sin\varphi\cos\theta + v_{i+1}\sin\varphi\sin\theta\right)$$
$$+ j\left(u_i\sin\varphi\cos\theta - v_i\sin\varphi\sin\theta + u_{i+1}\cos\varphi\cos\theta - v_{i+1}\cos\varphi\sin\theta\right)$$

$$s'_{i+1} = s_{i+1} e^{j\varphi}$$
$$= \left(u_i\cos\varphi\sin\theta + v_i\cos\varphi\cos\theta - u_{i+1}\sin\varphi\sin\theta - v_{i+1}\sin\varphi\cos\theta\right)$$
$$+ j\left(u_i\sin\varphi\sin\theta + v_i\sin\varphi\cos\theta + u_{i+1}\cos\varphi\sin\theta + v_{i+1}\cos\varphi\cos\theta\right)$$

$$s'_{i+2} = s_{i+2} e^{j\varphi}$$
$$= \left(u_{i+2}\cos\varphi\cos\theta - v_{i+2}\cos\varphi\sin\theta - u_{i+3}\sin\varphi\cos\theta + v_{i+3}\sin\varphi\sin\theta\right)$$
$$+ j\left(u_{i+2}\sin\varphi\cos\theta - v_{i+2}\sin\varphi\sin\theta + u_{i+3}\cos\varphi\cos\theta - v_{i+3}\cos\varphi\sin\theta\right)$$

$$\frac{9}{i+3} = s_{i+3}e^{j\varphi}$$

$$= \left( u_{i+2}\cos\varphi\sin\theta + v_{i+2}\cos\varphi\cos\theta - u_{i+3}\sin\varphi\sin\theta - v_{i+3}\sin\varphi\cos\theta \right)\ ;$$

$$+ j\left( u_{i+2}\sin\varphi\sin\theta + v_{i+2}\sin\varphi\cos\theta + u_{i+3}\cos\varphi\sin\theta + v_{i+3}\cos\varphi\cos\theta \right)$$

and the multiple fourth symbols comprise:

$$w_i = \left( u_i\cos\varphi\cos\theta - v_i\cos\varphi\sin\theta - u_{i+1}\sin\varphi\cos\theta + v_{i+1}\sin\varphi\sin\theta \right)$$

$$+ j\left( u_{i+2}\cos\varphi\cos\theta - v_{i+2}\cos\varphi\sin\theta - u_{i+3}\sin\varphi\cos\theta + v_{i+3}\sin\varphi\sin\theta \right)$$

$$w_{i+1} = \left( u_i\cos\varphi\sin\theta + v_i\cos\varphi\cos\theta - u_{i+1}\sin\varphi\sin\theta - v_{i+1}\sin\varphi\cos\theta \right)$$

$$+ j\left( u_{i+2}\cos\varphi\sin\theta + v_{i+2}\cos\varphi\cos\theta - u_{i+3}\sin\varphi\sin\theta - v_{i+3}\sin\varphi\cos\theta \right)$$

$$w_{i+2} = \left( u_i\sin\varphi\cos\theta - v_i\sin\varphi\sin\theta + u_{i+1}\cos\varphi\cos\theta - v_{i+1}\cos\varphi\sin\theta \right)$$

$$+ j\left( u_{i+2}\sin\varphi\cos\theta - v_{i+2}\sin\varphi\sin\theta + u_{i+3}\cos\varphi\cos\theta - v_{i+3}\cos\varphi\sin\theta \right)$$

$$w_{i+3} = \left( u_i\sin\varphi\sin\theta + v_i\sin\varphi\cos\theta + u_{i+1}\cos\varphi\sin\theta + v_{i+1}\cos\varphi\cos\theta \right)$$

$$+ j\left( u_{i+2}\sin\varphi\sin\theta + v_{i+2}\sin\varphi\cos\theta + u_{i+3}\cos\varphi\sin\theta + v_{i+3}\cos\varphi\cos\theta \right)\ ;$$

where, $\varphi$ is the second predetermined angle.

5. The information transmission method according to claim 1, wherein the information transmission method further comprises:

   determining the first predetermined angle and the second predetermined angle based on a symbol error rate.

6. The information transmission method according to claim 5, wherein when the constellation symbols are binary phase shift keying (BPSK) symbols and a signal to noise ratio is greater than a predetermined value, the first predetermined angle $\theta = 45°$, and the second predetermined angle $\varphi = 60°$.

7. The information transmission method according to claim 1, wherein the mapping the multiple fourth symbols into multiple resource elements comprises:

   dispersedly mapping fourth symbols containing the same signal components onto unneighboring resource elements experiencing independent or uncorrelated channel fading.

8. The information transmission method according to claim 7, wherein resource elements to which the same codeword corresponds come from different physical resource block pairs, and are located at unneighboring time-frequency positions away from each other.

9. An information transmission apparatus suitable for nonorthogonal multiple access, comprising:

   a data modulating unit configured to modulate data to be transmitted into multiple constellation symbols;
   a first rotating unit configured to rotate the multiple constellation symbols by a first predetermined angle respectively to obtain multiple first symbols;
   a first interleaving unit configured to perform real part and imaginary part interleaving on the multiple first symbols to obtain multiple second symbols; wherein, real parts and imaginary parts belonging to the same first symbol are dispersed to positions of real parts and imaginary parts of different second symbols;
a second rotating unit configured to rotate the multiple second symbols by a second predetermined angle respectively to obtain multiple third symbols;
a second interleaving unit configured to perform real part and imaginary part interleaving on the multiple third symbols to obtain multiple fourth symbols; wherein, real parts and imaginary parts belonging to the same third symbol are dispersed to positions of real parts and imaginary parts of different fourth symbols; and
a resource mapping unit configured to map the multiple fourth symbols onto multiple resource elements and perform transmission of information.

10. The information transmission apparatus according to claim 9, wherein each N fourth symbols are mapped onto N resource elements in M time-frequency resource elements to form a codeword; where, M and N are positive integers, and M is greater than N.

11. The information transmission apparatus according to claim 9, wherein the information transmission apparatus further comprises:

an angle determining unit configured to determine the first predetermined angle and the second predetermined angle based on a symbol error rate.

12. The information transmission apparatus according to claim 9, wherein the resource mapping unit is further configured to: dispersedly map fourth symbols containing the same signal components onto unneighboring resource elements experiencing independent or uncorrelated channel fading.

13. The information transmission apparatus according to claim 12, wherein resource elements to which the same codeword corresponds come from different physical resource block pairs, and are located at unneighboring time-frequency positions away from each other.

14. A communication system, comprising:

a transmitting device configured with the information transmission apparatus as claimed in claim 9; and
a receiving device configured to receive and demodulate information transmitted by the transmitting device.

15. The communication system according to claim 14, wherein multiple transmitting devices are configured to respectively map symbols onto multiple resource elements to perform nonorthogonal multiple access.

**Fig. 1**

$$s_i = \left(u_i \cos\theta - v_i \sin\theta\right) + j\left(u_{i+1} \cos\theta - v_{i+1} \sin\theta\right)$$

$$s_{i+1} = \left(u_i \sin\theta + v_i \cos\theta\right) + j\left(u_{i+1} \sin\theta + v_{i+1} \cos\theta\right)$$

$$s_{i+2} = \left(u_{i+2} \cos\theta - v_{i+2} \sin\theta\right) + j\left(u_{i+3} \cos\theta - v_{i+3} \sin\theta\right)$$

$$s_{i+3} = \left(u_{i+2} \sin\theta + v_{i+2} \cos\theta\right) + j\left(u_{i+3} \sin\theta + v_{i+3} \cos\theta\right)$$

**Fig. 2**

301

a transmitting device modulates data to be transmitted into multiple constellation symbols

302

the transmitting device rotates the multiple constellation symbols by a first predetermined angle respectively to obtain multiple first symbols

303

the transmitting device performs real part and imaginary part interleaving on the multiple first symbols to obtain multiple second symbols; wherein, real parts and imaginary parts belonging to the same first symbol are dispersed to positions of real parts and imaginary parts of different second symbols

304

the transmitting device rotates the multiple second symbols by a second predetermined angle respectively to obtain multiple third symbols

305

the transmitting device performs real part and imaginary part interleaving on the multiple third symbols to obtain multiple fourth symbols; wherein, real parts and imaginary parts belonging to the same third symbol are dispersed to positions of real parts and imaginary parts of different fourth symbols

306

the transmitting device maps the multiple fourth symbols onto multiple resource elements and performs transmission of information

## Fig. 3

$$w_i = \left(u_i \cos\varphi \cos\theta - v_i \cos\varphi \sin\theta - u_{i+1} \sin\varphi \cos\theta + v_{i+1} \sin\varphi \sin\theta\right)$$
$$+ j\left(u_{i+2} \cos\varphi \cos\theta - v_{i+2} \cos\varphi \sin\theta - u_{i+3} \sin\varphi \cos\theta + v_{i+3} \sin\varphi \sin\theta\right)$$
$$w_{i+1} = \left(u_i \cos\varphi \sin\theta + v_i \cos\varphi \cos\theta - u_{i+1} \sin\varphi \sin\theta - v_{i+1} \sin\varphi \cos\theta\right)$$
$$+ j\left(u_{i+2} \cos\varphi \sin\theta + v_{i+2} \cos\varphi \cos\theta - u_{i+3} \sin\varphi \sin\theta - v_{i+3} \sin\varphi \cos\theta\right)$$

$$w_{i+2} = \left(u_i \sin\varphi \cos\theta - v_i \sin\varphi \sin\theta + u_{i+1} \cos\varphi \cos\theta - v_{i+1} \cos\varphi \sin\theta\right)$$
$$+ j\left(u_{i+2} \sin\varphi \cos\theta - v_{i+2} \sin\varphi \sin\theta + u_{i+3} \cos\varphi \cos\theta - v_{i+3} \cos\varphi \sin\theta\right)$$
$$w_{i+3} = \left(u_i \sin\varphi \sin\theta + v_i \sin\varphi \cos\theta + u_{i+1} \cos\varphi \sin\theta + v_{i+1} \cos\varphi \cos\theta\right)$$
$$+ j\left(u_{i+2} \sin\varphi \sin\theta + v_{i+2} \sin\varphi \cos\theta + u_{i+3} \cos\varphi \sin\theta + v_{i+3} \cos\varphi \cos\theta\right)$$

# Fig. 4

Start

501

a transmitting device modulates data to be
transmitted into multiple codewords; each
codeword contains N non-zero constellation
symbols

502

the transmitting device selects a codeword

503

the transmitting device rotates N constellation
symbols by the first predetermined angle
respectively to obtain N first symbols

504

the transmitting device performs real part and
imaginary part interleaving on the N first
symbols to obtain N second symbols

505

the transmitting device rotates the N second
symbols by the second predetermined angle
respectively to obtain N third symbols

506

the transmitting device performs real part and
imaginary part interleaving on the N third
symbols to obtain multiple fourth symbols

507

the transmitting device maps N fourth symbols
onto N resource elements in the M time-
frequency resource elements

508

whether exists a codeword
that is not processed

Yes

No

End

Fig. 5

**Fig. 6**

Rotating and interleaving

**Fig. 7**

SCMA method

$a_1 \cos\theta + ja_2 \cos\theta$

$a_1 \sin\theta + ja_2 \sin\theta$

$a_3 \cos\theta + ja_4 \cos\theta$

$a_3 \sin\theta + ja_4 \sin\theta$

Dual-rotation method

$(a_1 g - a_2 f) + j(a_3 g - a_4 f)$

$(a_1 u - a_2 v) + j(a_3 u - a_4 v)$

$(a_1 f + a_2 g) + j(a_3 f - a_4 g)$

$(a_1 v + a_2 u) + j(a_3 v - a_4 u)$

$g(\theta, \varphi) = \cos\theta \cos\varphi$
$f(\theta, \varphi) = \cos\theta \sin\varphi$
$u(\theta, \varphi) = \sin\theta \cos\varphi$
$v(\theta, \varphi) = \sin\theta \sin\varphi$

**Fig. 8**

Fig. 9

Fig. 10

Fig. 11

**Fig. 12**

Fig. 13

Fig. 14

1500

Information transmission apparatus

1501

Data modulating
unit

1502

First rotating unit

1503

First interleaving
unit

1507

Angle determining
unit

1504

Second rotating unit

1505

Second interleaving
unit

1506

Resource mapping
unit

Fig. 15

Fig. 16

Fig. 17

Fig. 18

# INTERNATIONAL SEARCH REPORT

| International application No. |
| --- |
| **PCT/CN2016/073796** |

### A. CLASSIFICATION OF SUBJECT MATTER

H04B 7/26 (2006.01) i

According to International Patent Classification (IPC) or to both national classification and IPC

### B. FIELDS SEARCHED

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNPAT; CNKI; WPI; EPODOC: multiple access, real part, imaginary part, quadratic revolution, one revolution, again, transfer, MTC, particle, virtual, multiple, constellation, imaginary, real, rotat+, access, second, symbol, interweave, interference, resource particle, angle

### C. DOCUMENTS CONSIDERED TO BE RELEVANT

| Category* | Citation of document, with indication, where appropriate, of the relevant passages | Relevant to claim No. |
| --- | --- | --- |
| Y | CN 102904665 A (HUAWEI TECHNOLOGIES CO., LTD.), 30 January 2013 (30.01.2013), description, paragraphs [0052]-[0101] | 1-15 |
| Y | CN 103178890 A (ZTE CORP.), 26 June 2013 (26.06.2013), claim 1, and description, paragraph [0112] | 1-15 |
| A | CN 101621490 A (BEIJING UNIVERSITY OF POSTS AND TELECOMMUNICATIONS), 06 January 2010 (06.01.2010), the whole document | 1-15 |
| A | US 2007058745 A1 (SONY CORP.), 15 March 2007 (15.03.2007), the whole document | 1-15 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 September 2016 (12.09.2016) | **07 November 2016 (07.11.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Dechuang** Telephone No.: (86-10) **62413859** |
| --- | --- |

Form PCT/ISA/210 (second sheet) (July 2009)

# INTERNATIONAL SEARCH REPORT
## Information on patent family members

| International application No. |
| --- |
| **PCT/CN2016/073796** |

| Patent Documents referred in the Report | Publication Date | Patent Family | Publication Date |
| --- | --- | --- | --- |
| CN 102904665 A | 30 January 2013 | None | |
| CN 103178890 A | 26 June 2013 | WO 2013097385 A1 | 04 July 2013 |
| CN 101621490 A | 06 January 2010 | None | |
| US 2007058745 A1 | 15 March 2007 | CN 1929470 A | 14 March 2007 |
| | | JP 2007074618 A | 22 March 2007 |

Form PCT/ISA/210 (patent family annex) (July 2009)